# FASCICULE DE BREVET EUROPEEN

(11) **EP 1 196 111 B1**
(45) Date de publication et mention de la délivrance du brevet: **22.03.2006**
(21) Numéro de dépôt: 00951655.0
(22) Date de dépôt: 12.07.2000
(51) Int. Cl.: A61C 8/00

(54) **IMPLANT DENTAIRE A DEUX MATERIAUX BIOCOMPATIBLES**
AUS ZWEI BIOKOMPATIBELEN MATERIALIEN HERGESTELLTES ZAHNIMPLANTAT
DENTAL IMPLANT COMPRISING TWO BIOCOMPATIBLE MATERIALS

(30) Priorité: 16.07.1999 FR 9909273
(43) Date de publication de la demande: 17.04.2002
(73) Titulaire: Vital Implant, 63360 Saint Beauzire (FR)
(72) Inventeur: CATERINI, Richard, F-69530 Orlienas (FR); CANTALOUBE, Daniel, F-78000 Versailles (FR); FROMENTAL, Robert, F-69006 Lyon (FR); QUEYROY, Alain, F-38100 Grenoble (FR)
(74) Mandataire: Thibault, Jean-Marc
(86) Numéro de dépôt international: PCT/FR2000/002008
(87) Numéro de publication internationale: WO 2001/005325

(56) Documents cités:
- DE-A- 19 508 224
- GB-A- 2 199 626
- US-A- 3 808 606
- US-A- 4 492 577

## Description

La présente invention concerne un implant dentaire à deux matériaux, qui sont à la fois biocompatibles et qui présentent une intégration particulièrement rapide à l'os environnant.

L'invention concerne également une prothèse dentaire complète comprenant un implant dentaire à deux matériaux, qui sont à la fois biocompatibles et qui présentent une rapide intégration à l'os environnant.

Un implant dentaire est utilisé pour adapter une prothèse dentaire amovible et/ou fixée, en vue de redonner à un patient, partiellement ou totalement édenté, une fonction de mastication, un confort buccal, et une esthétique. L'implant permet de créer dans le maxillaire ou dans le mandibule d'un patient des ancrages stables, résistants efficaces, non-iatrogènes et durables. Le plus souvent, l'implant est une pièce en forme de douille cylindrique ou tronconique, munie d'un filetage extérieur, d'une partie de liaison femelle avec un taraudage intérieur, et d'une tête avec une empreinte à l'une de ses extrémités. Le filetage extérieur est éventuellement auto-taraudant et permet directement l'insertion de l'implant par vissage dans l'os de la mâchoire supérieure ou inférieure du patient. La partie de liaison femelle permet de positionner sur l'implant un système prothétique, appelé aussi faux moignon, par vissage dans le taraudage intérieur. Le faux moignon reçoit ensuite la couronne dentaire faisant saillie dans la cavité buccale.

Une dent artificielle classique, fabriquée totalement à partir d'une poudre métallique présente une durée de vie relativement limitée, car la solidité de l'implant est insuffisante en l'absence de toute structure résistante. La dent est également fragile, car sa forme n'assure pas une répartition égale de la pression de mastication.

Le brevet FR- 2 747 031 décrit des implants, enfouis ou non enfouis, en titane massif dont le modèle plus ou moins élaboré est destiné à améliorer la consolidation de l'implant dans l'os du maxillaire ou du mandibule. Des perçages radiaux et des méplats sont réalisés du côté de l'extrémité implantée dans l'os. Ces réalisations permettent d'avoir une bonne précision de pose mais ne sont pas très favorables à une bonne consolidation osseuse.

Une autre conception d'un implant s'appuie sur la présence d'un axe structurant et résistant, par exemple en alliage à mémoire de forme entouré de divers revêtements, dont un revêtement externe rugueux, par exemple à partir de titane projeté, ou poreux, par exemple en hydroxyapatite. Mais le manque de cohésion des différentes couches entre elles conduit fréquemment, lors de la mise en place, à une détérioration du revêtement externe rugueux ou poreux.

Si ces conceptions sont favorables à la consolidation osseuse par la présence d'éléments poreux, elles sont souvent difficiles à implanter au plus près de l'os, leur géométrie obligeant à prévoir un jeu significatif entre l'implant et la cavité osseuse préparée pour le recevoir. cavite osseuse preparée pour le recevoir.

Un implant dentaire selon le préambule de la revendication 1 est décrit dans le brevet no. US-A-4 492 577.

Le problème posé est de réaliser un implant dentaire dont les caractéristiques accélèrent son intégration dans le système osseux du maxillaire supérieur et du mandibule, avec comme conséquence une fiabilité accrue de l'intervention et de la durabilité de la prothèse globale, et améliorent les conditions de sa pause entraînant une fiabilité durable.

Le but de l'invention est de pallier le manque d'efficacité des implants existants en constituant une ou plusieurs parties de l'implant en métal poreux.

Suivant un premier aspect de l'invention, un implant dentaire, est réalisé en un premier métal. L'implant est caractérisé en ce qu'il comprend une couche extérieure de revêtement en un deuxième métal poreux.

Suivant un autre aspect de l'invention, un implant est caractérisé en ce qu'il comprend un trou ménagé à partir de l'une de ses extrémités, et un noyau en un deuxième métal poreux, inséré dans ledit trou.

De préférence, le trou est un trou inférieur, borgne et axial, qui s'étend longitudinalement, et qui est ménagé à partir de l'extrémité de perforation de l'implant. L'implant comprend un filetage qui s'étend à partir de l'extrémité de perforation de l'implant et une tête à l'autre extrémité. On place la couche extérieure de revêtement en deuxième métal poreux sur une hauteur donnée au-dessus du filetage et sous la tête. La couche extérieure de revêtement peut présenter un relief comprenant au moins une zone en méplat ou en creux. Le trou inférieur s'étend sur une longueur inférieure à la hauteur du filetage. L'implant peut comprendre un ou plusieurs perçages ménagés jusqu'au trou, perçages qui vont de ce fait assurer une jonction jusqu'au noyau en métal poreux inséré dans ledit trou. Dans l'un des modes de réalisation, le noyau en métal poreux fait saillie dans le perçage jusqu'au filetage. Dans ce cas, le noyau en métal poreux peut comporter un ou plusieurs creux ménagés dans ladite partie faisant saillie dans le perçage. Dans une autre variante de réalisation, le noyau en métal poreux peut comprendre un creux situé à sa base, à proximité de l'extrémité de perforation.

En ce qui concerne les matériaux employés pour la réalisation de l'implant, le premier métal utilisé pour la structure de base de l'implant est un alliage métallique à mémoire de forme, notamment des alliages à base de titane, et de préférence des alliages Ti-Ni, des alliages Ti-Ni-Co, des alliages Ti-Ni-Fe, ou tous alliages biocompatibles à mémoire de forme. La phase du premier alliage métallique à mémoire de forme a été éduquée, afin d'obtenir, sous l'effet de la 5 température, une diminution du diamètre intérieur du trou de façon à bloquer le noyau poreux. Dans un autre mode de réalisation, la phase de l'alliage à mémoire de forme a été éduquée, afin d'obtenir, sous l'effet de la température corporelle de sensiblement 37 °C, une augmentation de son diamètre externe dans la zone de l'os. Le deuxième métal poreux constituant la couche extérieure de revêtement et/ou le noyau présente de 20 à 50 % de porosité ouverte. Il présente également de 50 à 400 µm de dimensions de pores. Le deuxième métal poreux de la couche extérieure de revêtement ou du noyau est du titane, ou des alliages à base de titane, et de préférence des alliages Ti-Ni, des alliages Ti-Ni-Co, des alliages Ti-Ni-Fe, ou tous alliages à base de titane biocompatibles.

Selon un dernier aspect de l'invention, une prothèse dentaire comprend une couronne, un faux moignon et un implant dentaire.

D'autres avantages de l'implant dentaire selon l'invention apparaîtront à la lecture de la description détaillée de l'invention, en se référant aux dessins donnés à titre d'illustration, dans lequel :

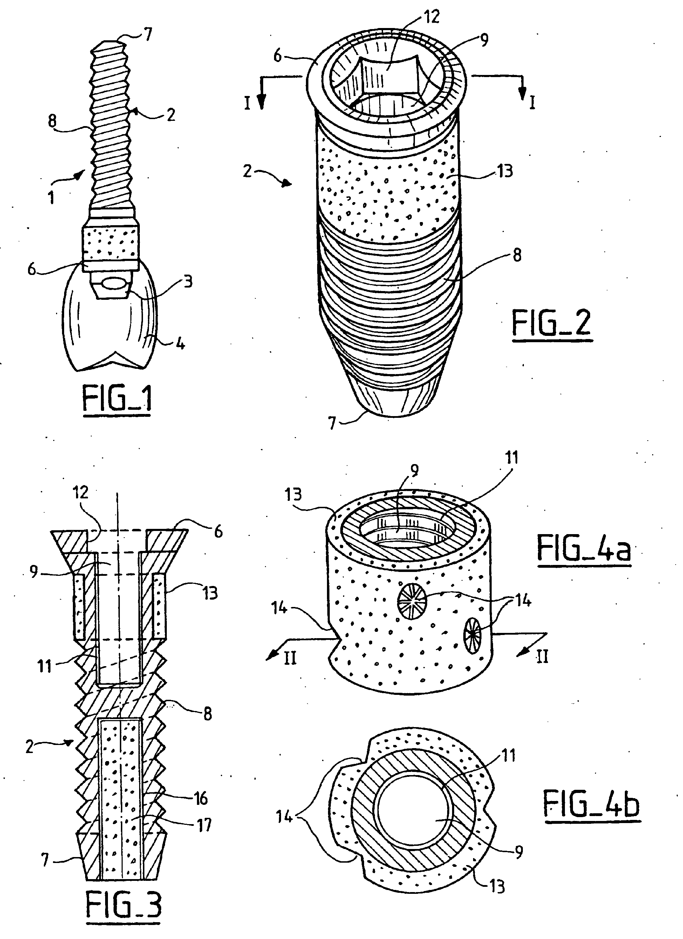

- la Figure 1 représente une prothèse dentaire complète ;
- la Figure 2 représente une vue en perspective d'un implant dentaire ;
- la Figure 3 représente l'implant dentaire vu en coupe longitudinale, selon la ligne I - I de la Figure 2 ;
- la Figure 4a représente en perspective une partie de l'implant au niveau de la couche extérieure de revêtement ;
- la Figure 4b représente une coupe transversale selon la ligne Il - Il de la Figure 4a, de l'implant au niveau de la couche extérieure de revêtement ;
- la Figure 5a représente en perspective une partie du filetage de l'implant dentaire ;
- la Figure 5b représente une coupe transversale selon la ligne III - III de la Figure 5a du filetage au niveau d'un perçage ;
- la Figure 6a représente en coupe longitudinale un détail d'un perçage du filetage selon un mode de réalisation de l'implant dentaire ;
- la Figure 6b représente en coupe longitudinale un détail d'un perçage du filetage selon un deuxième mode de réalisation de l'implant dentaire ;
- la Figure 6c représente en coupe longitudinale un détail d'un perçage du filetage selon un troisième mode de réalisation de l'implant dentaire ;
- la Figure 6d représente en coupe longitudinale un détail d'un perçage du filetage selon un quatrième mode de réalisation de l'implant dentaire ; et
- la Figure 7 représente une vue en coupe longitudinale d'une partie de l'implant dentaire située à l'extrémité de perforation, selon un autre mode de réalisation.

Une prothèse dentaire 1, destinée à remplacer une dent totalement manquante, comprend un implant dentaire 2, sur lequel est fixé un faux moignon 3. Sur le faux moignon 3 vient se positionner la couronne complète 4, par exemple en céramique ou en métal recouvert d'émail, correspondant à la forme de la dent à remplacer. L'implant dentaire 2 est réalisé en un premier métal biocompatible.

L'implant, dentaire 2, généralement cylindrique ou tronconique, comprend une tête 6, à l'une de ses extrémités, et à l'opposé une extrémité de perforation 7. L'extrémité de perforation 7, rentrant en premier dans l'os de la mâchoire lors de la pose chirurgicale de l'implant 2, présente une forme sensiblement tronconique ou pointue. Entre la tête 6 et l'extrémité de perforation 7, un filetage 8, à conformation hélicoïdale, le plus souvent auto-taraudant, court le long de la surface extérieure cylindrique de l'implant, en direction de l'extrémité de perforation 7. Dans ce cas, la pose de l'implant peut se faire par simple rotation entraînant un vissage dans la paroi osseuse, sans avoir besoin de forer l'os au préalable. De par sa forme, l'implant 2 a un contact le plus proche possible avec le tissu osseux, dans lequel a été éventuellement foré un taraudage de précision, et ceci, sans qu'il soit nécessaire de procéder à un calibrage de l'implant 2 par rapport à sa cavité d'insertion. Grâce au filetage 8, on évite un phénomène de chasse d'une partie tronconique, laquelle assure un maintien de la prothèse dès les tous premiers jours avant la consolidation osseuse.

La tête 6 peut présenter une forme évasée, en formant un collet. A partir de la tête 6, on ménage dans la masse de l'implant 2 un trou 9 supérieur, cylindrique, borgne, longitudinal et axial, orienté vers l'extrémité de perforation 7, que l'on munit d'un taraudage intérieur 11. Le taraudage intérieur 11 est destiné à recevoir et à verrouiller un filetage appartenant au faux moignon 3. Au sommet du trou supérieur 9, la tête 6 comprend une empreinte 12 formant une liaison femelle, par exemple en hexagone, utilisée pour venir en prise avec une partie mâle. correspondante de la clé de vissage chirurgicale.

Sous la tête 6 et au-dessus du filetage 8, on peut constituer une zone dont la surface extérieure est cylindrique, avec une couche extérieure de revêtement 13. La couche de revêtement 13 est disposée sur une hauteur donnée, et couvre environ un cinquième de la hauteur totale de l'implant 2. La couche de revêtement 13 est réalisée en un deuxième métal qui va être à la fois biocompatible et poreux. On positionne cette couche externe poreuse 13, de façon à ce qu'elle se trouve au niveau de l'os cortical du maxillaire ou du mandibule. Grâce à la présence de la couche poreuse 13 entourant cet endroit de l'implant 2, les ostéoblastes peuvent se développer de façon centripète. La couche 13 permet aux tissus osseux de coloniser l'élément poreux et d'avoir, après consolidation, un lien quasiment indestructible entre le maxillaire ou le mandibule, et l'implant 2. La couche 13 accélère la consolidation finale et la mise en charge de la prothèse 1.

La couche extérieure de revêtement 13 peut présenter en outre un relief. Ce relief est sous la forme d'au moins un méplat, ou alvéole, ou creux 14. Si le nombre d'irrégularités de ce type est supérieur à deux, on peut par exemple les répartir en une ou plusieurs lignes décalées. Le creux 14 est sensiblement conique ou encore en forme de coupelle. Le creux 14 est destiné à répartir sur l'os cortical les efforts engendrés par la mastication, en créant un verrouillage anti-rotation, anti-bascule et anti-chasse, sous la tête 6, et ceci dès les premiers jours suivant la pose. Après la pose, le caillot sanguin entourant l'implant 2 est progressivement remplacé, pendant des premiers jours, par un bourgeon régénératif centripète. En réalisant le relief, l'implant 2 est tout de suite maintenu. Sous l'effet de la pression centripète du bourgeon, l'implant 2 ne peut basculer. En effet, la croissance du bourgeon n'étant pas uniforme, des zones d'appui apparaissent en premier à certains points de l'implant 2, ce qui entraîne des contraintes de bascule ou de rotation. Le bourgeon a donc tendance à se réfléchir sur la surface de l'implant 2 pour générer in fine des lignes de force tangentielles peu favorables à la colonisation de l'implant 2. Le guidage progressif des lignes de force créées par le bourgeonnement, dû au relief, oriente, et donc favorise la colonisation des microporosités de la couche de revêtement 13 par les cellules ostéogènes.

Selon une réalisation préférentielle, l'implant dentaire 2 peut également comprendre un trou inférieur cylindrique 16 ménagé à partir de l'extrémité de perforation 7. Le trou inférieur 16 est un trou borgne et longitudinal, qui s'étend axialement en direction du trou supérieur 9, ou de la tête 6 de l'implant 2. La structure ainsi formée est analogue à un cylindre métallique creux, ou une douille, en un métal. Le trou inférieur 16 s'étend sur une longueur plus faible que la hauteur du filetage 8.

Dans le trou inférieur 16, définissant un volume intérieur de la structure de l'implant 2, on insère un noyau poreux de forme sensiblement cylindrique 17. Après enchâssement dans le trou inférieur 16, les dimensions du noyau 17, diamètre et hauteur, sont analogues aux dimensions, diamètre et hauteur, dudit trou inférieur 16. En raison de l'ouverture inférieure du trou borgne, le noyau poreux 17 va être en communication avec l'os de la mâchoire. Le noyau 17 occupe la totalité ou la quasi-totalité du volume intérieur disponible de l'implant 2. Après la pose chirurgicale de l'implant 2, le noyau 17 se trouve au niveau de l'os spongieux du maxillaire ou du mandibule. L'élément formant noyau interne 17 est réalisé en un deuxième métal qui va être à la fois biocompatible et poreux.

L'implant dentaire 2 va de préférence comprendre un ou plusieurs perçages 18, qui traversent une paroi 19 de l'implant 2, et sont ainsi ménagés jusqu'au trou inférieur 16, et en conséquence jusqu'au noyau 17 inséré dans le trou inférieur 16. Le ou les perçages 18 sont établis au niveau du filetage 8. Le ou les perçages mettent en communication l'intérieur de l'implant, comprenant, le noyau 17, et l'os dans lequel on visse l'implant 2. Par la présence des perçages 18 dans la paroi 19 de la structure, les tissus osseux colonisent l'espace interne constitué par le trou 16. Après consolidation, cette colonisation précoce accroît le nombre de points de liaison entre le maxillaire, ou le mandibule, et l'implant 2. La fixation de l'implant 2 est ainsi très fortement consolidée et définitive.

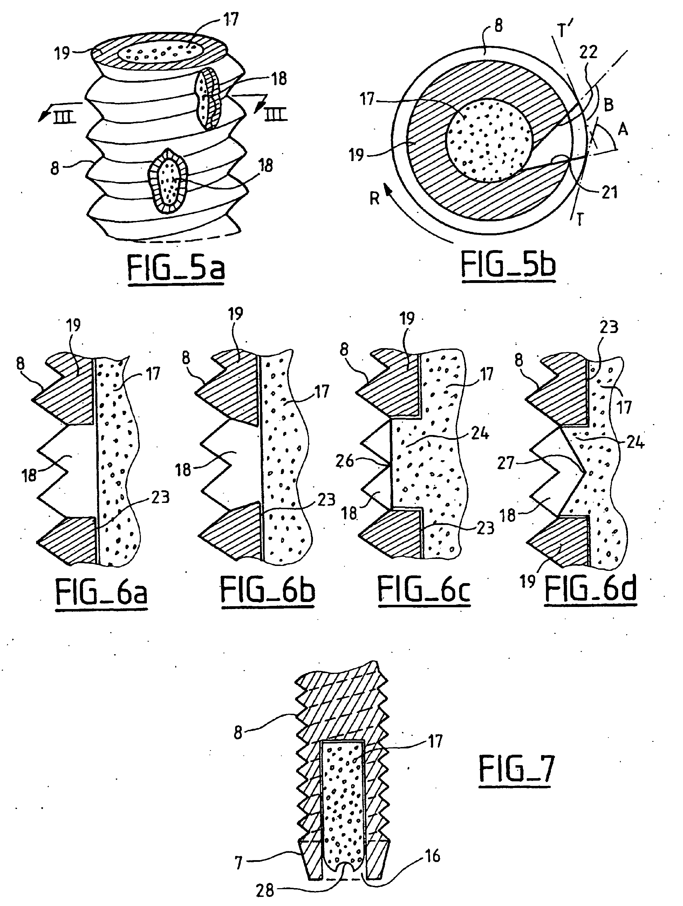

Les formes et les dimensions du perçage 8 peuvent être quelconques. Par exemple, le perçage 18 a une section ovoïde ou ronde. Le perçage 18 peut être cylindrique, cas du mode de réalisation visible dans la Figure 6a. Le perçage 18 peut également être tronconique, cas du mode de réalisation visible dans les Figures 5b et 6b. Le perçage 18 peut être radial, mais il va de préférence être asymétrique. En particulier, le taux d'asymétrie est tel que, l'angle A formé entre une surface avant 21 du perçage 18, définie par rapport au sens de rotation R de l'implant 2 en perforation, et la tangente T de la surface avant 21 est inférieur à 90°. De plus, l'angle B formé entre une surface arrière 22 du perçage 18, définie par rapport au sens de rotation R de l'implant en perforation, et la tangente T' de la surface arrière 22 est supérieur à 90°. Cette asymétrie permet d'éviter, lors du vissage de pose de l'implant 2, tout effet de rabotage de l'os par une arête vive, et tout effet de bourrage du perçage 18 par des débris d'os.

Dans le cas où le perçage 18 est cylindrique ou encore tronconique, le noyau 17 vient à fleur de la surface interne 23 de la paroi 19 de l'implant au niveau du filetage 8. Dans un autre mode de réalisation, dans un cas où le perçage 18 est cylindrique, le noyau 17 fait saillie dans le perçage 18, sensiblement radialement, par exemple avec une excroissance 24, se prolongeant jusqu'au niveau du fond du filet 26, tout en ayant une conformation cylindrique, et ayant les dimensions du perçage 18. Avantageusement dans un autre mode de réalisation, la partie en excroissance 24 du noyau 17, faisant saillie dans le perçage 18, peut comporter un ou plusieurs creux 27, qui seront alors en regard du perçage 18. La profondeur du creux 27 peut atteindre le niveau correspondant à la surface interne 23 de la paroi de l'implant 19. Le creux 27 de l'excroissance 24 est sensiblement conique ou encore en forme de coupelle. La présence de creux 27 favorise la colonisation du noyau poreux 17 par les cellules ostéogènes.

Enfin, dans un dernier mode de réalisation, l'extrémité inférieure du noyau 17, située face à l'ouverture inférieure du trou borgne 16, peut avoir une forme en pointe régulièrement arrondie, par exemple en dôme. Ce dôme fait que l'on va constituer un volume libre, non occupé par le noyau 17. De plus, l'extrémité inférieure arrondie du noyau 17 peut comprendre un creux 28 faisant face à l'ouverture du trou inférieur borgne 16. Le creux 28 du noyau 27 est sensiblement conique ou encore en forme de coupelle. La présence du creux 28 au pied du noyau poreux 27 favorise un verrouillage axial de l'implant 2, par une meilleure colonisation des cellules ostéogènes.

Le premier métal utilisé pour la structure de l'implant 2 est un alliage métallique massif à mémoire de forme, notamment des alliages de titane, de préférence des alliages Titane-Nickel, Titane-Nickel-Cobalt, Titane-Nickel-Fer, ou tous alliages biocompatibles à mémoire de forme. La structure massive de l'implant 2, permet grâce aux caractéristiques de superélasticité et d'amortissement propres aux alliages métalliques à mémoire de forme, une réduction des effets répétés d'impact et d'atténuation des vibrations lors de la mastication. Pour la déformation superélastique, on notera des valeurs de 8 à 10 %. Pour la mémoire de forme, la forme recouvrable atteint 8 %, et la force recouvrable varie de 10 à 30 kg/mm². Pour le ds/dT, on notera une valeur moyenne de 10 MPa/K. Pour le Module de Young, on notera une valeur moyenne de 90 GPa. Ces propriétés sont définies par la norme AFNOR NF A51-080. Le Nitinol™, de la société Unitec, comprenant 54% de Ni et 46 % de Ti, a donné de bons résultats en terme de qualité d'implant obtenu.

La phase de l'alliage métallique à mémoire de forme a été éduquée, afin d'obtenir, sous l'effet de la température, une diminution du diamètre du trou inférieur 16 de façon à bloquer le noyau poreux 17, et le cas échéant à obtenir l'excroissance 24. Si l'éducation donnée à l'alliage conduit à une diminution des diamètres, la structure massive de l'implant 2, ainsi réalisée permet, par la caractéristique de mémoire de forme de l'alliage métallique à base de titane, d'obtenir une liaison forte avec le noyau poreux 17. Le noyau 17 est ainsi retenu de façon certaine et permanente et la pénétration des ostéoblastes dans la partie poreuse assure une liaison complémentaire avec le maxillaire ou le mandibule. On évite la destruction du noyau 17 lors de la pose de l'implant 2 et on diminue la possibilité de sa désolidarisation lors de la colonisation par les ostéoblastes.

Suivant le mode de réalisation retenu, la phase de l'alliage à mémoire de forme peut également être éduquée, afin d'obtenir à l'inverse, sous l'effet de la température corporelle de 37 °C, une augmentation de son diamètre externe de quelques dixièmes de millimètres dans la zone de l'os. Si l'implant 2 ne comporte pas l'élément poreux et que l'éducation donnée à l'alliage conduit à une augmentation des diamètres, la structure massive de l'implant 2 ainsi réalisée permet alors, par la caractéristique de mémoire de forme de l'alliage métallique à base de titane, d'obtenir une liaison immédiate et forte avec le système osseux des maxillaires supérieurs et des mandibules.

Le métal poreux de la couche extérieure de revêtement 13 peut être différent ou analogue à celui du noyau 17. La couche de revêtement poreuse 13 et le noyau poreux 17 répondent à la caractéristique de porosité ouverte. Leur taux de porosité va être compris entre 20 et 50%, de préférence autour de 40 %, valeur déterminée par comparaison de densité entre le métal sous sa forme massive et le métal sous sa forme poreuse. Leur diamètre de pores va être compris entre 50 et 400 microns, de préférence entre 200 et 300 microns, mesuré par microscopie. En ce qui concerne la couche de revêtement, le diamètre des pores va en diminuant à partir de l'extérieur de l'implant 2 vers l'intérieur, en direction du centre axial de la structure. Les chocs et tensions générés par la mastication vont comprimer la couche poreuse qui joue ainsi le rôle de coussin amortisseur.

On utilise du titane, ou principalement des alliages de titane, de préférence des alliages Titane-Nickel, Titane-Nickel-Cobalt, Titane-Nickel-Fer, ou tous alliages de titane biocompatibles. Le métal poreux ne doit pas présenter de risque de couple électrolytique avec le premier métal massif de la structure. Les alliages à base de titane possèdent un amortissement élevé aux chocs et diminuent la conséquence des impacts répétés dus à la mastication, à l'image de ceux utilisés pour la structure. La porosité accélère la colonisation par les ostéoblastes, lesquels accèdent rapidement au noyau central 17 par les ouvertures 18 pratiquées dans la structure. La couche extérieure poreuse 13 est obtenue par divers procédés de mise en oeuvre des poudres métalliques, comme la projection plasma, les techniques de compactage et/ou de frittage permettant la mise en oeuvre des poudres métalliques. Le noyau poreux 17 peut être réalisé par les diverses techniques de métallurgie des poudres et en particulier par le frittage réactif.

Les alliages à base de Ti sont particulièrement résistants à la corrosion. Les essais de biocompatibilité sur animaux n'ont révélé aucune trace d'éléments métalliques relargués (Ni), aucune réaction de rejet, aucune réaction inflammatoire, aucune toxicité ni cancérogenèse. La présence de titane dans tous les éléments constitutifs de l'implant 2 présenté ci-dessus, et plus particulièrement dans les parties poreuses 13, 17, favorise la repousse osseuse. La repousse osseuse est d'autant plus accélérée dans ces mêmes parties poreuses, lorsque les compromis sur la porosité sont bien respectés.

L'implant dentaire et la prothèse dentaire selon l'invention ne sont pas limités par les détails des modes de réalisation et des exemples choisis pour l'illustrer. Des modifications peuvent être apportées sans pour autant sortir du cadre de l'invention comme défini par les revendications suivantes.

## Revendications

1. Implant dentaire comprenant une partie interne massive réalisée en un premier métal et une couche extérieure de revêtement (13) poreuse réalisée en un deuxième métal, **caractérisé en ce que** le premier métal est un alliage métallique à mémoire de forme.

2. Implant dentaire selon la revendication 1, **caractérisée en ce que** l'alliage métallique à mémoire de forme est un alliage de titane, de préférence un alliage Ti-Ni, Ti-Ni-Co ou Ti-Ni-Fe.

3. Implant dentaire selon la revendication 1 ou 2, **caractérisé en ce que** le deuxième métal poreux est du titane ou un alliage de titane, de préférence un alliage Ti-Ni, Ti-Ni-Co ou Ti-Ni-Fe.

4. Implant dentaire selon la revendication 1, **caractérisé en ce qu'**il comprend en outre un trou (16) ménagé à partir de l'une de ses extrémités (7), et un noyau (17) inséré dans le trou (16), réalisé avec le deuxième métal poreux.

5. Implant dentaire selon la revendication 4, **caractérisé en ce que** le trou est un trou inférieur, borgne et axial (16), qui s'étend longitudinalement, et qui est ménagé à partir de l'extrémité de perforation (7) de l'implant.

6. Implant dentaire selon la revendication 5 , **caractérisé en ce qu'**il comprend un filetage (8) s'étendant à partir de l'extrémité de perforation (7) et une tête (6) placée à l'autre extrémité, et **en ce que** la couche extérieure de revêtement (13) est disposée sur une hauteur donnée au-dessus du filetage (8) et sous la tête (6).

7. Implant dentaire selon la revendication 6, **caractérisé en ce que** la couche extérieure de revêtement (13) présente un relief comprenant au moins un méplat ou creux (14).

8. Implant dentaire selon la revendication 6 ou 7, **caractérisé en ce que** le trou inférieur (16) s'étend sur une longueur inférieure à la hauteur du filetage.

9. Implant dentaire selon l'une des revendications 5-8 **caractérisé en ce qu'**il comprend un ou plusieurs perçages (18) ménagés jusqu'au trou inférieur (16), et jusqu'au noyau en métal poreux (17) inséré dans ledit trou inférieur (16).

10. Implant dentaire selon la revendication 9, **caractérisé en ce que** le perçage (18) est disposé au niveau du filetage, a une section ovoïde ou ronde, et est cylindrique ou tronconique, et **en ce que** l'angle (A) formé entre une surface avant (21) du perçage (18) par rapport au sens de rotation (R) de l'implant (2) en perforation et la tangente (T) de la surface avant est inférieur à 90°, et l'angle (B) formé entre une surface arrière (22) du perçage (18) par rapport au sens de rotation (R) de l'implant (2) en perforation et la tangente (T') de la surface arrière est supérieur à 90°.

11. Implant dentaire selon la revendication 9 ou 10, **caractérisé en ce que** le noyau en métal poreux (17) fait saillie dans le perçage (18) jusqu'au filetage (8), et **en ce que** le noyau en métal poreux (17) comporte un ou plusieurs creux (27) ménagés dans ladite partie faisant saillie (24) dans le perçage (18).

12. Implant dentaire selon l'une des revendications précédentes, **caractérisé en ce que** le noyau en métal poreux (17) comprend un creux (28) situé à sa base, à proximité de l'extrémité de perforation (7).

13. Implant dentaire selon l'une des revendications précédentes, **caractérisé en ce que** le deuxième métal poreux de la couche extérieure de revêtement (13) ou du noyau (17) présente de 20 à 50 % de porosité ouverte, et de 50 à 400 µm de dimensions de pores.

14. Implant dentaire selon la revendication 13, **caractérisé en ce que** le diamètre des pores de la couche extérieure de revêtement (13) diminue de l'extérieur vers l'intérieur de l'implant.

15. Implant dentaire selon la revendication 11, **caractérisé en ce que** la phase de l'alliage métallique à mémoire de forme a été éduquée, afin d'obtenir, sous l'effet de la température, une diminution du diamètre intérieur du trou (16) de façon à bloquer le noyau poreux (17) et à obtenir la partie faisant saillie (24).

16. Implant dentaire selon la revendication 1, **caractérisé en ce que** la phase de l'alliage à mémoire de forme a été éduquée, afin d'obtenir, sous l'effet de la température corporelle, sensiblement de 37°C, une augmentation de son diamètre externe dans la zone de l'os.

17. Prothèse dentaire comprenant une couronne (4), un faux moignon (3) et un implant dentaire (2), selon l'une des revendications précédentes.

## Patentansprüche

1. Zahnimplantat, das einen aus einem ersten Metall ausgeführten massiven Innenteil und eine äußere Schicht eines porösen Belags (13) umfaßt, die aus einem zweiten Metall ausgeführt ist, **dadurch gekennzeichnet, daß** das erste Metall eine metallische Legierung mit Formgedächtnis ist.

2. Zahnimplantat nach Anspruch 1, **dadurch gekennzeichnet, daß** die metallische Legierung mit Formgedächtnis eine Titanlegierung ist, vorzugsweise eine Legierung Ti-Ni, Ti-Ni-Co oder Ti-Ni-Fe.

3. Zahnimplantat nach Anspruch 1 oder 2, **dadurch gekennzeichnet, daß** das zweite poröse Metall Titan oder eine Titanlegierung ist, vorzugsweise eine Legierung Ti-Ni, Ti-Ni-Co oder Ti-Ni-Fe.

4. Zahnimplantat nach Anspruch 1, **dadurch gekennzeichnet, daß** es außerdem ein von dem einen seiner Enden (7) her ausgespartes Loch (16) und einen in das Loch (16) eingefügten Kern (17) umfaßt, der mit dem zweiten porösen Metall ausgeführt ist.

5. Zahnimplantat nach Anspruch 4, **dadurch gekennzeichnet, daß** das Loch ein blindes und axiales unteres Loch (16) ist, das sich länglich erstreckt und das von dem Bohrungsende (7) des Implantats her ausgespart ist.

6. Zahnimplantat nach Anspruch 5, **dadurch gekennzeichnet, daß** es ein Gewinde (8) umfaßt, das sich von dem Bohrungsende (7) aus erstreckt, und einen Kopf (6), der am anderen Ende angeordnet ist, und **dadurch**, daß die äußere Belagsschicht (13) auf einer vorgegebenen Höhe über dem Gewinde (8) und unter dem Kopf (6) angeordnet ist.

7. Zahnimplantat nach Anspruch 6, **dadurch gekennzeichnet, daß** die äußere Beiagsschicht (13) ein Relief aufweist, das wenigstens eine Abflachung oder Ausnehmung (14) umfaßt.

8. Zahnimplantat nach Anspruch 6 oder 7, **dadurch gekennzeichnet, daß** das Innenloch (16) sich über eine Länge erstreckt, die kleiner als die Höhe des Gewindes ist.

9. Zahnimplantat nach einem der Ansprüche 5 bis 8, **dadurch gekennzeichnet, daß** es eine oder mehrere Perforierungen (18) umfaßt, die bis zum Innenloch (16) und bis zum porösen Metallkern (17) ausgespart sind, der in das Innenloch (16) eingefügt ist.

10. Zahnimplantat nach Anspruch 9, **dadurch gekennzeichnet, daß** die Perforierung (18) in Höhe des Gewindes angeordnet ist, einen ovalen oder runden Querschnitt hat und zylindrisch oder kegelstumpfförmig ist und **dadurch**, daß der Winkel (A), der zwischen einer vorderen Oberfläche (21) der Perforierung (18) im Verhältnis zur Rotationsrichtung (R) des Implantats (2) beim Bohren und der Tangente (T) der vorderen Oberfläche ausgebildet ist, kleiner als 90° ist und der Winkel (B), der zwischen einer hinteren Oberfläche (22) der Perforierung (18) im Verhältnis zur Rotationsrichtung (R) des Implantats (2) beim Bohren und der Tangente (T') der hinteren Oberfläche ausgebildet ist, größer als 90° ist.

11. Zahnimplantat nach Anspruch 9 oder 10, **dadurch gekennzeichnet, daß** der Kern aus porösem Metall (17) in die Perforierung (18) bis zum Gewinde (8) herausragt, und **dadurch**, daß der Kern aus porösem Metall (17) eine oder mehrere Ausnehmungen (27) umfaßt, die in dem in die Perforierung (18) herausragenden Teil (24) ausgespart sind.

12. Zahnimplantat nach einem der vorhergehenden Ansprüche, **dadurch gekennzeichnet, daß** der Kern aus porösem Metall (17) eine Ausnehmung (28) umfaßt, die an seinem Fuß in nahe dem Bohrungsende (7) angeordnet ist.

13. Zahnimplantat nach einem der vorhergehenden Ansprüche, **dadurch gekennzeichnet, daß** das zweite poröse Metall der äußeren Belagsschicht (13) oder des Kerns (17) 20 bis 50 % offene Porosität und 50 bis 400 µm Porenabmessungen aufweist.

14. Zahnimplantat nach Anspruch 13, **dadurch gekennzeichnet, daß** der Durchmesser der Poren der äußeren Belagsschicht (13) vom Äußeren zum Inneren des Implantats hin abnimmt.

15. Zahnimplantat nach Anspruch 11, **dadurch gekennzeichnet, daß** die metallische Legierungsphase mit Formgedächtnis trainiert worden ist, um unter der Wirkung der Temperatur eine Verminderung des Innendurchmessers des Loches (16) derart zu erhalten, daß der poröse Kern (17) festgesetzt wird und der herausragende Teil (24) erhalten wird.

16. Zahnimplantat nach Anspruch1, **dadurch gekennzeichnet, daß** die Legierungsphase mit Formgedächtnis trainiert worden ist, um unter der Wirkung der Körpertemperatur, im Wesentlichen 37°C, eine Erhöhung ihres Außendurchmessers in der Zone des Knochens zu erhalten.

17. Zahnprothese, die eine Krone (4), einen künstlichen Stumpf (3) und ein Zahnimplantat (2) gemäß einem der vorhergehenden Ansprüche umfaßt.

## Claims

1. Dental implant comprising a solid inner part made in a first metal and an outer coating layer (13) made in a second metal, **characterized in that** the first metal is a shape memory metal alloy.

2. Dental implant as in claim 1, **characterized in that** the shape memory metal alloy is a titanium alloy, preferably a Ti-Ni, Ti-Ni-Co or Ti-Ni-Fe alloy.

3. Dental implant as in claim 1 or 2, **characterized in that** the second porous metal is titanium or a titanium alloy preferably a Ti-Ni, Ti-Ni-Co or Ti-Ni-Fe alloy.

4. Dental implant as in claim 1, **characterized in that** it also comprises a hole (16) starting at one of its ends (7), and a core (17) inserted in the hole (16) made of the second porous metal.

5. Dental implant as in claim 4, **characterized in that** the hole is a blind, axial lower hole (16) which extends longitudinally and which starts at the perforation end (7) of the implant.

6. Dental implant as in claim 5, **characterized in that** it comprises a screw thread (8) extending from the perforation end (7) and a head (6) positioned at the other end, and **in that** the outer coating layer (13) is arranged over a given height above the screw thread (8) and under the head (6).

7. Dental implant as in claim 6, **characterized in that** the outer coating layer (13) has a relief comprising at least one flat or hollow (14).

8. Dental implant as in claim 6 or 7, **characterized in that** the lower hole (16) extends over a shorter length than the height of the screw thread.

9. Dental implant as in any of claims 5 to 8, **characterized in that** it comprises one or more bores (18) pierced as far as the lower hole (16) and as far as the core in porous metal (17) inserted in said lower hole (16).

10. Dental implant as in claim 9, **characterized in that** the bore (18) is pierced at the thread, has an avoid or round cross section and is of cylindrical or truncated cone shape, and **in that** the angle (A) formed between a front surface (21) of the bore (18), with respect to the direction of rotation (R) of the implant (2) during perforation, and the tangent (T) of the front surface is less than 90°, and angle (B) formed between a rear surface (22) of the bore (18) with respect to the direction of rotation (R) of the implant (2) during perforation and tangent (T') of the rear surface is greater than 90°.

11. Dental implant as in claim 9 or 10, **characterized in that** the core in porous metal (17) projects into the bore (18) as far as the thread (8), and **in that** the core in porous metal (17) comprises one or more hollows (27) made in said part (24) projecting into the bore (18).

12. Dental implant as in any of the preceding claims, **characterized in that** the core in porous metal (17) comprises a hollow (28) located at its base, in the vicinity of the perforation end (7).

13. Dental implant as in any of the preceding claims, **characterized in that** the second porous metal of the outer coating layer (13) or of the core (17) has 20 to 50% open porosity and a pore size of 50 to 400 µm.

14. Dental implant as in claim 13, **characterized in that** the diameter of the pores of the outer coating layer (13) decreases from the outside towards the inside of the implant.

15. Dental implant as in claim 11, **characterized in that** the phase of the shape memory metal alloy was taught to obtain, under the effect of temperature, a reduction in the inner diameter of the hole (16) so as to lock the porous core (17) in place and obtain the projecting part (24).

16. Dental implant as in claim 1, **characterized in that** the phase of the shape memory alloy with was taught to obtain, under the effect of body temperature of substantially 37°C, an increase in its outer diameter in the bone area.

17. Dental prosthesis comprising a crown (4), an inlay-core (3) and a dental implant (2) as in any of the preceding claims.
